# EUROPÄISCHE PATENTSCHRIFT

(11) **EP 2 873 507 B1**
(45) Veröffentlichungstag und Bekanntmachung des Hinweises auf die Patenterteilung: **01.05.2019**
(21) Anmeldenummer: 14190907.7
(22) Anmeldetag: 29.10.2014
(51) Int. Cl.: B29C 47/24, B29C 63/10, B29C 63/14, B29C 47/12, B29C 47/02, F16L 11/112

(54) **VERFAHREN ZUR KONTINUIERLICHEN FERTIGUNG VON KUNSTSTOFFROHREN**
METHOD FOR CONTINUOUS MANUFACTURE OF PLASTIC PIPES
PROCÉDÉ DE PRODUCTION CONTINUE DE TUBES EN MATIÈRE PLASTIQUE

(30) Priorität: 30.10.2013 DE 102013111956
(43) Veröffentlichungstag der Anmeldung: 20.05.2015
(73) Patentinhaber: egeplast international GmbH, 48268 Greven (DE)
(72) Erfinder: Ulrich, Herbert, 48282 Emsdetten (DE)
(74) Vertreter: Fritz, Edmund Lothar

(56) Entgegenhaltungen:
- EP-A- 0 333 061
- EP-A1- 2 600 047
- EP-B1- 2 223 792
- FR-A1- 2 816 878
- JP-A- S 623 921
- JP-A- S5 714 019
- JP-A- H05 220 814

## Beschreibung

Die vorliegende Erfindung betrifft ein Verfahren zur kontinuierlichen Fertigung von Kunststoffrohren bei dem mittels einer Extrusionsvorrichtung ein einen rohrförmigen Kern bildender Rohrstrang kontinuierlich axial extrudiert wird und stromabwärts zur Extrusionsvorrichtung in der gleichen Extrusionslinie wenigstens ein Element einer Verstärkungsschicht in einem Wickelvorgang spiralförmig auf den rohrförmigen Kern gewickelt wird, wobei das wenigstens eine Element, welches spiralförmig auf den rohrförmigen Kern gewickelt wird, ein Profil mit wenigstens einer Hohlkammer ist.

In der DE 695 13 247 T2 wird ein Verfahren zur Herstellung von verstärkten Kunststoffrohren beschrieben, bei dem ein oder mehrere Verstärkungsbänder spiralförmig auf einen rohrförmigen Kern gewickelt werden. Im Regelfall ist es bei diesem Verfahren so, dass das Zuliefersystem des Bandes um die Längsachse des Kerns herum rotiert, während der Kern in axialer Richtung durch die Vorrichtung verschoben wird. Es wird in dieser Schrift erwähnt, dass alternativ auch der Kern um seine Längsachse rotieren kann, wobei dann das Zuliefersystem des Bandes nicht rotiert, sondern nur das Band von diesem abgewickelt wird. Bei dieser Variante ist es jedoch notwendig, den Rohrstrang des rohrförmigen Kerns nach einer definierten Länge zu trennen, wenn ein herkömmlicher Axialextruder für die Extrusion des Rohrkerns verwendet wird, da man sonst den Rohrstrang, der den Extruder in axialer Richtung verlässt, in sich verdrillen würde.

In der DE-PS 1 184 938 wird ein Verfahren zum kontinuierlichen Herstellen von verstärkten Kunststoffrohren durch Aufwickeln von mit härtbaren Harzen getränkten Faserstoffbändern beschrieben, bei dem ein Kernrohr mittels einer in dieses hineingreifenden Haltevorrichtung um seine Längsachse gedreht wird. Bei diesem Verfahren schiebt sich das gefertigte Kunststoffrohr in Längsrichtung über das Kernrohr und von diesem ab. Es handelt sich zwar um eine kontinuierliche Rohrfertigung, aber es wird hier ein Kernrohr von endlicher Länge verwendet und nicht ein endlos axial extrudiertes Kernrohr, welches dann als Rohrkern Teil des gefertigten Rohrendprodukts wird.

In der EP 2 223 792 B1 wird ein Verfahren zur Herstellung von Kunststoffrohren beschrieben, bei dem man wenigstens ein Verstärkungsmaterial in Form von Bändern oder Fasern auf einen extrudierten zylindrischen Rohrkern aus Kunststoff wickelt, wobei der Rohrkern während des Wickelvorgangs axial in Längsrichtung vorgeschoben wird und gleichzeitig um seine Längsachse rotiert. Bei diesem Verfahren wird zunächst der Rohrkern aus Kunststoff kontinuierlich und endlos extrudiert mit einem nur axialen Vorschub, also ohne Drall und dann wird dieser Rohrkern durchtrennt, das abgetrennte Rohrstück in Rotation versetzt und bei gleichzeitigem axialen Vorschub wird dann eine Lage aus einem bandförmigen Verstärkungsmaterial auf das endliche Rohrstück spiralförmig aufgewickelt. Da hier kontinuierlich gewickelt wird, muss man die Umwicklung an der Trennstelle des umwickelten Rohrkerns durchtrennen. In dieser Schrift wird erwähnt, dass man anstelle eines flachen Bandes als Verstärkungsmaterial auch ein Profil auf den Rohrkern aufwickeln kann.

In der DE 27 01 167 A1 ist ein Verfahren zur Herstellung nahtloser rohrförmiger Filterelemente beschrieben, bei dem eine drehbare rohrförmige Extrusionsdüse verwendet wird, aus der ein sich drehender fester rohrförmiger Kern kontinuierlich extrudiert wird. Dieser Kern wird dann durch Schneidmittel mit Löchern oder Schlitzen versehen, um so ein Filterrohr mit Durchgängen für den Durchtritt einer Flüssigkeit in den Kern zu ermöglichen. Auf den Rohrkern werden Fasern aus einem extrudierbaren thermoplastischen Polymermaterial aufgesponnen.

Aus der EP 0 333 061 B1 ist ein Verfahren zur Herstellung eines gewickelten thermoplastischen Rohres bekannt, welches ein Innenrohr umfasst, auf welches schraubenlinienförmige ein Strang aus einem Hohlkammerprofil gewickelt wird. Zwischen den nebeneinander liegenden Seitenflächen benachbarter Stränge des Hohlkammerprofils wird ein zusätzliches thermoplastisches Kunststoffmaterial eingebracht, welches die Seitenflächen zweier Wicklungen miteinander verschweißt. Für die Außenschicht des Rohres wird deshalb ein Hohlkammerprofil gewählt, um eine Rohrwand mit einem hohen Widerstandsmoment bei vergleichsweise geringem Gewicht zu schaffen. Das Innenrohr ist bei diesem bekannten Verfahren entweder ein herkömmliches Extrusionsrohr oder ein Wickelrohr. Es gibt in dieser Schrift keine Anregung, den Rohrstrang bereits beim Verlassen der Düse um seine Längsachse rotieren zu lassen.

In der US 2003/0005971 A1 wird ein thermisch isoliertes Rohr und ein Verfahren zu dessen Herstellung beschrieben. Bei diesem Verfahren wird auf die äußere Oberfläche eines sich mit axialem Vorschub bewegenden Rohres ein isolierendes Material aus einem Elastomeren aufgebracht, danach ein helikaler Umfangsschlitz in das isolierende Material eingebracht, um die Flexibilität des Rohrs zu erhöhen und dann wird das isolierte Rohr mit einem Mantelrohr überzogen. Das Kernrohr ist hier jedoch ein flexibles Rohr. In den Beispielen wird in dieser Schrift in den meisten Fällen das Kernrohr mit axialem Vorschub bewegt und über eine ringförmige Extrusionsdüse wird dann koaxial die Isolierschicht aufextrudiert. Alternativ dazu kann auch über eine seitlich angeordnete Extruderdüse mit radialen Extrusionsöffnungen das isolierende Material in einem Streifen aufgebracht werden, der helikal um das flexible Rohr gewunden wird. Dazu kann sich die gesamte Extrusionsvorrichtung um das Kernrohr drehen. Es wird erwähnt, dass es auch möglich ist, das Kernrohr in Rotation um seine Längsachse zu versetzen, so dass die Extrusionsdüse für den helikal aufzubringenden Streifen aus Isoliermaterial stationär bleiben kann. Es wird jedoch in den Zeichnungen die Extrusionsdüse, die das Kernrohr extrudiert nicht dargestellt und es wird in der Beschreibung dieser Schrift nicht erläutert, wie man ein sich um seine Längsachse drehendes Kernrohr extrudiert. Es ist also denkbar, dass das Kernrohr zunächst axial extrudiert wird, dann der Rohrstrang durchtrennt und erst danach in Rotation versetzt wird. Zudem handelt es sich um ein flexibles und nicht um ein nach dem Erkalten starres, weitgehend steifes Rohr, bei dem eine Verdrillung in einer Extrusionslinie nicht möglich ist.

Die Aufgabe der Erfindung besteht darin, ein Verfahren zur kontinuierlichen Fertigung von Kunststoffrohren mit den Merkmalen der eingangs genannten Gattung zur Verfügung zu stellen, welches die kontinuierliche Extrusion langer Rohrstränge ermöglicht, ohne Längenbegrenzung hinsichtlich des Rohrkerns und ohne die Notwendigkeit der Durchtrennung des Rohrstrangs im Extrusionsprozess.

Die Lösung dieser Aufgabe liefert ein Verfahren zur kontinuierlichen Fertigung von Kunststoffrohren der eingangs genannten Gattung mit den Merkmalen des Hauptanspruchs.

Erfindungsgemäß ist vorgesehen, dass der Rohrstrang des rohrförmigen Kerns bereits beim Verlassen einer Düse der Extrusionsvorrichtung um seine Längsachse rotiert und der Rohrstrang des rohrförmigen Kerns während des Wickelvorgangs um seine Längsachse rotiert.

Die vorliegende Erfindung ermöglicht somit eine kontinuierliche Fertigung von Kunststoffrohren als endlose Wickelrohre. Vorzugsweise ist vorgesehen, dass mindestens Teile der Rohrkopfdüse und/oder der Abzugsvorrichtung der Extrusionsvorrichtung während des Extrusionsvorgangs um eine mittige Achse rotieren.

Das erfindungsgemäße Verfahren ermöglicht es, in einem kontinuierlichen Prozess ein in seiner axialen Länge nicht begrenztes Rohr aus Kunststoff herzustellen, das einen kontinuierlich extrudierten rohrförmigen Kern (Kernrohr, Innenrohr) aufweist, welcher von wenigstens einer mit dem Kern verbundenen radial weiter außen liegenden Schicht (mittlere Schicht oder äußere Schicht) umgeben ist, die Hohlräume (Hohlkammern) aufweist. Bislang war die Fertigung eines solchen Rohrs beispielsweise in Wickelvorgängen nur in Rohrabschnitten von begrenzter Länge möglich. Die Fertigung von Rohren des vorgenannten Typs ist insbesondere dann technologisch besonders interessant, wenn Kunststoffrohre mit vergleichsweise großen Durchmessern herzustellen sind. Diese wurden bislang überwiegend in konventioneller Wickelrohrtechnik mit dadurch bedingten endlichen Rohrlängen gefertigt. Diese endliche Rohrlänge war bislang insofern weniger problematisch, als bei Rohren mit größeren Durchmessern auch durch die Notwendigkeit, diese zum Einsatzort zu transportieren, in der Regel eine Längenbegrenzung erforderlich war. Während sich auch an sich biegesteife Kunststoffrohre mit kleineren Durchmessern bis zu etwa 200 mm auf Trommeln aufwickeln lassen, ist dies bei Rohren mit größeren Durchmessern nicht mehr möglich. Folglich ist die auf dem Landwege transportierbare maximale Länge eines Rohrstrangs etwa auf die Länge der Ladefläche eines Lastkraftwagens begrenzt.

Wenn man hingegen andere Methoden schafft, um Rohre mit vergleichsweise großen Durchmessern wie zum Beispiel mehr als 1000 mm auch in Längen zu transportieren, die die Transportlänge eines LKW überschreitet, ist eine kontinuierliche Fertigung in unbegrenzter Länge besonders vorteilhaft. Hier bietet sich beispielsweise die Fertigung solcher Großrohre in der Nähe eines Gewässers an, so dass es möglich wird, diese Rohre kontinuierlich zu extrudieren und am Ende der Extrusionslinie den Rohrstrang direkt in das Gewässer laufen zu lassen. Da die Kunststoffrohre an der Wasseroberfläche schwimmen, können lange Rohrstränge mittels Transportschiffen geschleppt und so an den Einsatzort verbracht werden. Die Rohrextrusion kann somit über große Längen des Rohrstrangs andauern, ohne dass es notwendig ist, den Rohrstrang nach Extrusion einer für den Landtransport begrenzten Transportlänge zu durchtrennen. Die gesamte Extrusionslinie kann ohne Unterbrechung kontinuierlich arbeiten, wodurch die Rohrfertigung insgesamt rationeller wird als bei herkömmlichen Wickelverfahren.

Ein weiteres Anliegen der vorliegenden Erfindung ist somit die kontinuierliche Extrusion langer mechanisch belastbarer Rohrstränge aus Kunststoff mit großen Durchmessern, insbesondere im Bereich von mehr als 1000 mm Durchmesser, in einem rationellen wirtschaftlichen Fertigungsverfahren. Da die erfindungsgemäß auf den Rohrkern aufgewickelten Profile Hohlkammern aufweisen, ergibt sich zum einen eine mechanische Stabilisierung des Rohrs bei nur begrenzter Erhöhung des Gewichts des Rohrstrangs. Außerdem bieten die Hohlkammern die Möglichkeit, in diese einen Ballaststoff einzubringen, so dass man die Dichte pro Rohrlängeneinheit erhöhen kann, um ein zunächst schwimmend transportiertes Rohr für eine Verlegung auf dem Boden des Gewässers (Seeverlegung) zu versenken.

Das Rotieren des rohrförmigen Kerns während des Wickelvorgangs um seine Längsachse kann man beispielsweise gemäß einer bevorzugten Weiterbildung der vorliegenden Erfindung erzielen, indem man die Düse der Extrusionsvorrichtung während des Extrusionsvorgangs um eine mittige Achse rotieren lässt. Das Werkzeug der Extrusionsvorrichtung verlässt somit ein bereits um seine Längsachse rotierender noch heißer Schmelzestrang, der nachfolgend durch Kühlung mittels herkömmlicher Methoden abgekühlt und ausgehärtet werden kann. Da der rohrförmige Kern selbst rotiert, kann die Wickelvorrichtung mittels derer das Hohlkammerprofil auf den rohrförmigen Kern aufgebracht wird, feststehen. Bei herkömmlichen Extrusionslinien mit nicht rotierendem Rohrkern ist es hingegen notwendig, die gesamte Wickelvorrichtung um den Rohrkern rotieren zu lassen, was bei Rohren mit größeren Durchmessern sehr aufwändig ist, denn das Gewicht des rotierenden Teils der Wickelvorrichtung ist entsprechend hoch.

Das Hohlkammerprofil kann erfindungsgemäß insbesondere ebenfalls kontinuierlich extrudiert und dann der Extrusionslinie von radial/tangential außen zugeführt werden. Da der Rohrkern nicht nur um seine Achse rotiert, sondern gleichzeitig auch axialen Vorschub aufweist, wird das etwa radial zugeführte Hohlkammerprofil spiralförmig auf den Rohrkern aufgewickelt.

Vorzugsweise kann gemäß einer Weiterbildung der vorliegenden Erfindung wenigstens ein Hohlkammerprofil auf den frisch extrudierten noch heißen rohrförmigen Kern aufgewickelt werden, so dass sich eine stoffschlüssige Verbindung zwischen den Berührungsflächen von Hohlkammerprofil und rohrförmigem Kern ergibt.

Wenn man wenigstens eine Hohlkammer des Kunststoffrohrs nach dessen Extrusion mit einem Ballaststoff befüllt, sollte dieser Ballaststoff in der Hohlkammer vorzugsweise eine Dichte aufweisen, die mindestens etwa 1,3 g/cm³ beträgt. Die für derartige Kunststoffrohre verwendeten Kunststoffe wie Polyolefine haben eine Dichte von weniger als 1 g/cm³ und sind somit leichter als Wasser. Bei Polyethylen liegt die Dichte je nach Typ beispielsweise im Bereich von 0,87 -0,97 g/cm³, bei Polypropylen bei etwa 0,89 - 0,92 g/cm³. Um durch den Ballaststoff das Rohr so zu beschweren, dass es sich in Wasser versenken lässt, empfiehlt es sich, Ballaststoffe zu verwenden, deren Dichte einiges über 1 g/cm³ liegt, vorzugsweise weist daher der Ballaststoff in der Hohlkammer eine Dichte auf, die mindestens etwa 1,3 g/cm³ beträgt.

Es können beispielsweise mineralische Ballaststoffe verwendet werden, wie zum Beispiel Sand, Zement, Quarz, Gesteinsmehl, Kies, Split, Metallpartikel oder Glas.

Beispielsweise kann als Ballaststoff eine Aufschlämmung oder eine breiige dickflüssige Substanz, insbesondere eine Betonmischung, in die Hohlkammern eingefüllt werden, die anschließend aushärtet oder aber als Ballaststoff wird ein Schüttgut in rieselfähiger Form wie zum Beispiel Sand in die Hohlkammern eingefüllt. Im letztgenannten Fall werden die zum Einfüllen in die Hohlkammern verwendeten Öffnungen dann nachfolgend verschlossen, während dies bei der erstgenannten Alternative nicht notwendig ist, da eine aushärtende Betonmischung die Einfüllöffnungen verschließt.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine schematisch vereinfachte Darstellung einer beispielhaften erfindungsgemäßen Anlage zur kontinuierlichen Fertigung von Kunststoffrohren;
Figur 2 eine schematisch vereinfachte Darstellung der sich an die in Figur 1 dargestellten Bereiche der Extrusionslinie anschließenden Abschnitte der Anlage;
Figur 3 zeigt einen Querschnitt durch ein beispielhaftes Rohr, welches in einem Verfahren gemäß der vorliegenden Erfindung hergestellt wurde;
Figur 4 zeigt einen schematischen Längsschnitt durch ein beispielhaftes Rohr gemäß einem Schnitt IV-IV von Figur 3, wobei die Verhältnisse zwischen Wandstärke und Rohrdurchmesser nicht maßstabsgerecht wiedergegeben sind.

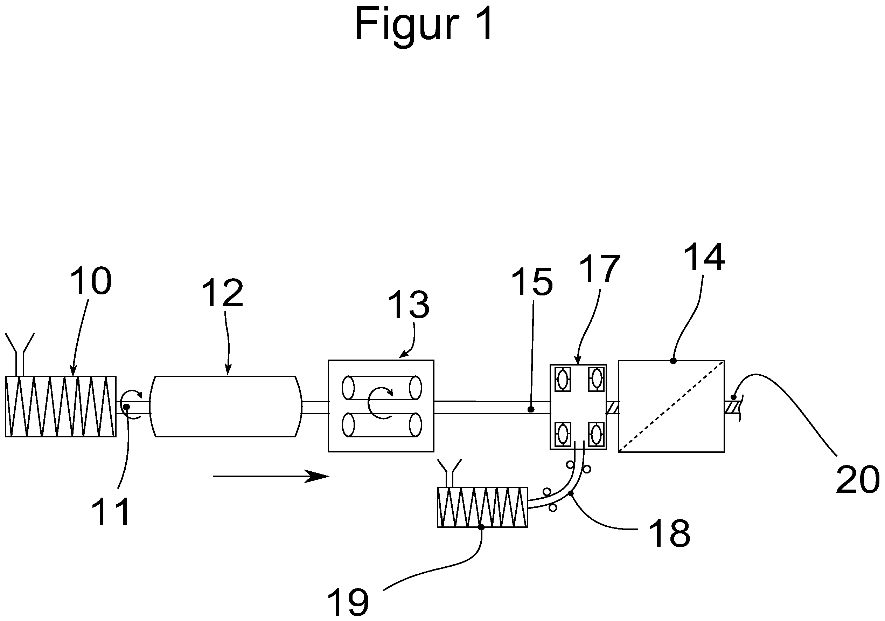

Zunächst wird auf Figur 1 Bezug genommen. Diese zeigt ein Anlagenschema einer erfindungsgemäßen Anlage. In der Zeichnung ganz links ist eine Extrusionsvorrichtung 10 gezeigt, mittels derer beispielsweise ein Kernrohr 11 aus Kunststoff kontinuierlich extrudiert und in axialer Richtung (in der Zeichnung nach rechts) vorgeschoben werden kann. Die Besonderheit besteht darin, dass diese Extrusionsvorrichtung 10 eine rotierende Rohrkopfdüse aufweist, die über einen festen mittigen Dorn verfügt, so dass der austretende Schmelzestrang um seine mittige Achse rotiert, wobei ein in der Extrusionslinie stromabwärts angeordneter Drallabzug 13 sowohl für einen kontinuierlichen axialen Vorschub des extrudierten Rohrstrangs 10 sorgt als auch für eine gleichzeitige Rotation des Rohrstrangs um seine Achse. In einer Kühlvorrichtung, beispielsweise einem Sprühbad 12, wird das heiße frisch extrudierte Rohr 11 in an sich bekannter Weise abgekühlt. Der abgekühlte sich um seine Achse drehende endlose Rohrstrang 15 bewegt sich somit weiter in Produktionsrichtung.

Aufgrund der kontinuierlichen Extrusion wird dabei vom Extruder 10 ständig weiter ein Rohrstrang 11, 15 produziert, der über den Abzug 13 axialen Vorschub erhält und gleichzeitig rotiert. Dieser Rohrstrang 15 wird dann einer stromabwärts in der Extrusionslinie angeordneten Wickelstation 17 zugeführt.

Diese Wickelstation 17 umfasst beispielsweise einen Schmelzebandextruder 19 mit einem Breitschlitzkopf, über den ein beispielsweise im Querschnitt rechteckiges Kunststoffhohlprofil 18 kontinuierlich extrudiert und in etwa radialer Richtung unter einem spitzen Winkel dem Rohrstrang 15 zugeführt wird und dadurch, dass letzterer um seine Achse rotiert, spiralförmig auf diesen Rohrstrang 15 aufgewickelt wird. Der ursprünglich extrudierte Rohrstrang bildet somit einen rohrförmigen Kern, welcher mit einem diesen verstärkenden flachen Hohlprofil umwickelt wird. Nach dem Aufwickeln wird das Hohlprofil 18 mit dem rohrförmigen Kern 15 verschweißt, beispielsweise durch Anwendung von Heißluft. Dadurch wird eine stoffschlüssige Verbindung zwischen dem Band 18 und der Oberfläche des Rohrstrangs 15 hergestellt. Das Hohlprofil kann beispielsweise so auf den rohrförmigen Kern aufgewickelt werden, dass die jeweiligen benachbarten Wicklungen der Bandlage etwa auf Stoß aneinandergrenzen.

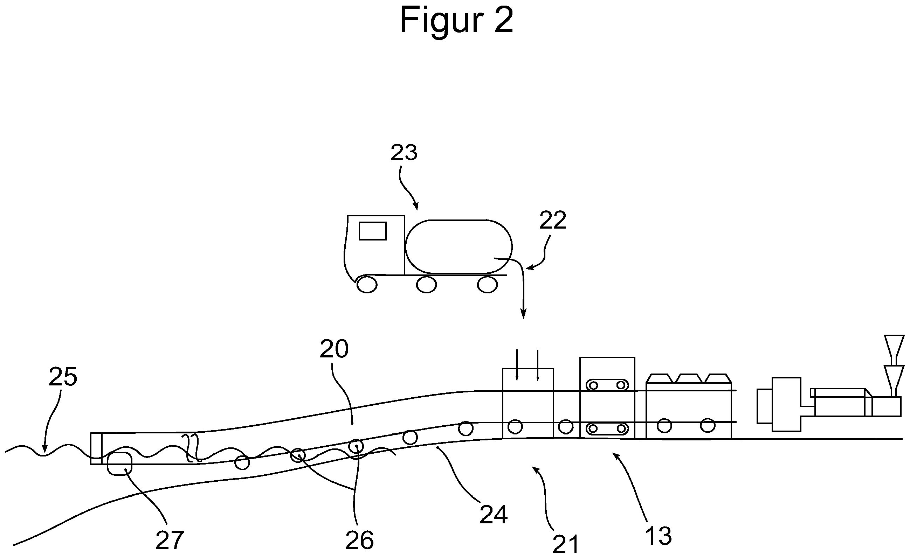

Das fertig extrudierte und umwickelte Kunststoffrohr 20 mit dem rohrförmigen Kern als Innenschicht und dem Hohlprofil als Außenschicht kann dann noch gegebenenfalls außen eine Signatur erhalten mit den Kenndaten der Rohrs, die beispielsweise durch eine Laservorrichtung aufgebracht werden kann. Danach kann das Rohr auch gegebenenfalls über eine Trennvorrichtung (Säge) 14 durchtrennt werden, sofern ein Ablängen des Rohrstrangs auf eine endliche Länge aus Transportgründen oder anderen Gründen gewünscht ist. Vorzugsweise erfolgt jedoch im Werk in der Extrusionslinie keine Durchtrennung, sondern das Rohr 20 wird fortlaufend weiter extrudiert und verlässt als endloser Rohrstrang die Werkshalle, um direkt in ein Gewässer hinein gefördert zu werden, so wie dies in Figur 2 dargestellt ist, auf die nachfolgend Bezug genommen wird.

Figur 2 zeigt denjenigen Bereich einer erfindungsgemäßen Anlage zur Extrusion langer Rohrstränge, der sich beispielsweise an eine Halle, in der eine Extrusionsanlage steht, wie sie zuvor anhand von Figur 1 geschildert wurde, im Freigelände anschließt. Im Anschluss an einen Drallabzug 13, der den Axialtransport des sich um seine Achse drehenden Rohrstrangs 20 bewirkt, findet sich stromabwärts in der Extrusionslinie eine Befüllstation 21, die das Rohr 20 durchläuft und in der das Rohr 20 mit einem Ballaststoff 22 befüllt wird. Dieser Ballaststoff kann beispielsweise aus einem Vorratsgebinde, zum Beispiel auch von der Ladefläche eines LKWs 23 in die Hohlkammern des Rohrs eingefüllt werden, die sich in der Außenschicht aus dem zuvor aufgewickelten Hohlprofil befinden. Dies kann ein mineralischer Ballaststoff sein, beispielsweise als Schüttgut in rieselfähiger Form oder eine Aufschlämmung, eine breiige dickflüssige Substanz, zum Beispiel eine Betonmischung. Das nachträgliche Einfüllen dieses Ballaststoffs in die Hohlkammern in diesem Abschnitt des Verfahrens kann beispielsweise erfolgen, nachdem Löcher in die Hohlkammern gebohrt werden, so dass der Innenraum der Hohlkammern so zugänglich wird und befüllt werden kann. Diese Löcher können anschließend wieder verschlossen werden, was aber nicht notwendig ist, wenn beispielsweise ein hydraulisch aushärtendes Gemisch als Ballaststoff verwendet wird, da dieses anschließend aushärtet und so die Einfüllöffnungen verschließt. Alternativ kann aber auch vorgesehen sein, dass der Ballaststoff bereits in einem früheren Stadium des Verfahrens in die Hohlkammern der Profilschicht eingebracht wird. Zum Beispiel kann der Ballaststoff auch schon bei der Extrusion des rohrförmigen Kerns oder bei der Herstellung der Hohlkammerprofilschicht eingebracht werden. Wichtig ist in diesem Zusammenhang, dass der ausgewählte Ballaststoff eine ausreichend hohe Dichte aufweist, die das Gewicht des Rohrstrangs so stark erhöht, dass er sich anschließend in einem Gewässer versenken lässt, was bei einem Rohrstrang aus einem üblichen Polyolefin mit einer Dichte unter 1 g/cm³ nicht der Fall wäre.

Das Gelände 24, auf dem das Rohr 20 weiter in Richtung Gewässer 25 transportiert wird, kann zum Gewässer hin abschüssig sein, wie dies in Figur 2 dargestellt ist. Das in axialer Richtung auf das Gewässer 25 zu geförderte Rohr 20 kann auf geeigneten Lagern 26 auf dem Untergrund gelagert sein, die ein gleitendes Fördern des Rohres ermöglichen, ohne dass die Gefahr besteht, dass dieses beschädigt wird. Dazu kann man beispielsweise Fahrzeugreifen oder ähnliche Gleitlager aus Gummi oder einem geeigneten Material mit verringerter Reibung verwenden. Im weiteren Vorschubweg gelangt dann das Rohr 20 in das Gewässer 25, wobei es sich um das Meer handeln kann, wenn die Produktion der Rohre direkt im Küstenbereich erfolgt. Dies ist insbesondere interessant für die Herstellung so genannter Seeauslaufleitungen für Abwasser oder dergleichen, die dann über das Gewässer direkt an den Verlegeort transportiert werden können. Solange sich Luft in dem Rohr 20 befindet, schwimmt dieses an der Gewässeroberfläche auch nach der Einbringung des Ballaststoffs 22. Das Rohr 20 kann im weiteren Förderweg auf der Gewässeroberfläche mittels geeigneter schwimmender Lager wie zum Beispiel durch Luftkissen 27 abgestützt werden, wodurch sich auch eine Drehstabilisierung des Rohrstrangs ergibt.

Rohre 20 dieser Art auch mit großen Durchmessern von mehr als 1 m können als lange Rohrstränge von beispielsweise mehreren 100 m auf dem Seeweg schwimmend mit Schleppschiffen transportiert werden. Wenn die gewünschte Länge des Rohrstrangs erreicht ist, kann dieser durchtrennt und abtransportiert werden, so dass die Extrusionslinie kontinuierlich weiter arbeiten und das nächste Rohr in das Gewässer 25 auslaufend extrudieren kann. Ein Schleppschiff kann auch mehrere Rohre der genannten Länge parallel nebeneinander liegend hinter sich herziehen und so schwimmend transportieren. Auf diese Weise können also mit einem einzigen Transportmittel auf dem Seeweg Kilometer an Rohrleitung mit vergleichsweise geringem Energieverbrauch transportiert werden. Hier wird der Vorteil gegenüber der herkömmlichen Großrohrfertigung deutlich, bei der auf der Ladefläche eines LKWs in der Regel nur jeweils Längen von weniger als 20 m transportiert werden konnten. Dementsprechend war eine erheblich größere Anzahl von Schweißverbindungen notwendig, um diese Rohrstücke am Verlegeort miteinander zu verbinden. Das Versenken der Rohre 20 am Verlegeort kann erfolgen, indem die Rohre mit Wasser geflutet werden, denn dann führt aufgrund der Ballaststoffe in der Rohrwand das erhöhte Eigengewicht des Rohrs dazu, dass das Rohr sinkt. Ein vorzeitiges Volllaufen der Rohre mit Wasser kann verhindert werden, indem die Rohre zunächst stirnseitig durch Deckel oder dergleichen verschlossen werden. Diese Deckel werden dann beim Fluten entfernt.

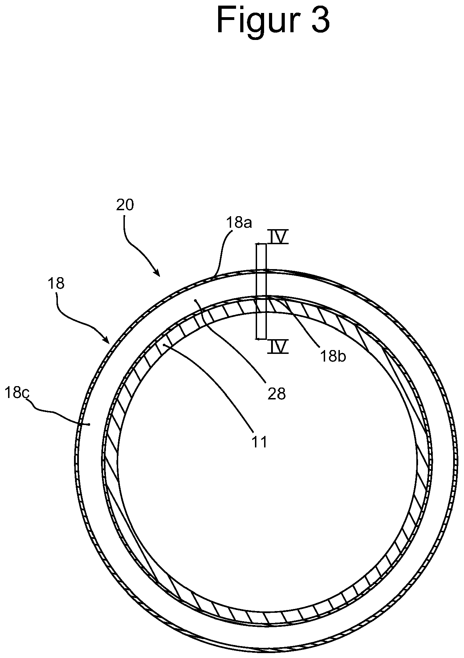

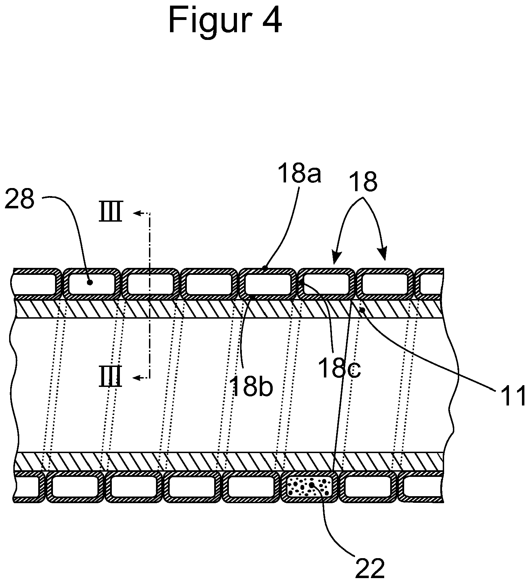

Nachfolgend wird unter Bezugnahme auf Figur 3 ein beispielhaftes Rohr 20, welches nach einem Verfahren gemäß der vorliegenden Erfindung hergestellt wurde, beschrieben. Das Rohr 20 umfasst den zunächst extrudierten rohrförmigen Kern 11, auf den außen das Kunststoffhohlprofil 18 aufgewickelt wurde. Das Kunststoffhohlprofil 18 ist hier beispielhaft ein Rechteckhohlprofil und umfasst eine Außenwand 18 a, die gleichzeitig die Außenschicht des fertigen Rohrs 20 ist, und eine Innenwand 18 b, die mit der Außenfläche des rohrförmigen Kerns 11 verschweißt wird. Zwischen der Außenwand 18 a und der Innenwand 18 b verlaufen in etwa radialer Richtung bezogen auf das Rohr 20 Stege 18 c. Diese Stege 18 c sind die jeweils seitlichen Wände der auf den rohrförmigen Kern aufgewickelten Hohlprofile 18. Durch jeweils zwei dieser Stege 18 c sowie Innenwand 18 b und Außenwand 18 a sind die im Querschnitt etwa rechteckigen Hohlkammern 28 der Hohlprofile 18 definiert, die mit einem Ballaststoff verfüllt werden können. Der Steg 18 c verläuft in Figur 3 hinter der Zeichenebene, da in Längsrichtung durch das aufgewickelte Hohlprofil geschnitten wurde und ist besser in Figur 4 zu erkennen.

Nachfolgend wird auf Figur 4 Bezug genommen, die einen Längsschnitt durch das in Figur 3 gezeigte Rohr 20 entlang der Linie IV-IV von Figur 3 zeigt. Hier kann man erkennen, dass die einzelnen Kunststoffhohlprofile 18 spiralförmig auf den rohrförmigen Kern 11 gewickelt wurden. Man sieht die Außenwand 18 a der Hohlprofile 18, die auf den rohrförmigen Kern aufgebrachte und mit diesem verschweißte Innenwand 18 b und man erkennt die rechteckige Querschnittsform der Kunststoffhohlprofile 18 mit den seitlichen radial verlaufenden Stegen 18 c, die jeweils etwa rechtwinklig zur Außenwand 18 a und von der Außenwand 18 a zur Innenwand 18 b des Kunststoffhohlprofils verlaufen, so dass sich ein im Querschnitt rechteckiges Hohlprofil ergibt mit einer etwa rechteckigen Hohlkammer 28. Der Hohlraum dieser Hohlkammer kann wie dies in Figur 4 für ein Kunststoffhohlprofil 18 angedeutet ist mit einem Ballaststoff 22 gefüllt werden, um das Gewicht des Rohrs zu erhöhen. Durch das erfindungsgemäße Fertigungsverfahren werden mehrschichtige Kunststoffrohre erhalten, die zum einen durch die Hohlprofile 18 mechanisch verstärkt sind, aber andererseits bei hohlen Kammern ein vergleichsweise niedriges Gewicht aufweisen, so dass im Vergleich zu einem Vollrohr bei der Herstellung Kunststoff eingespart wird. Gleichzeitig bieten Rohre dieses Typs die Möglichkeit, durch Einfüllen eines Ballaststoffs bei Bedarf das Gewicht des Rohrs zu erhöhen.

### Bezugszeichenliste

- 10: Extrusionsvorrichtung
- 11: Kernrohr
- 12: Sprühbad, Kühlvorrichtung
- 13: Drallabzug
- 14: Trennvorrichtung (Säge)
- 15: Rohrstrang
- 17: Wickelstation
- 18: Kunststoffhohlprofil
- 18 a: Innenwand
- 18 b: Außenwand
- 18 c: Stege
- 19: Schmelzebandextruder
- 20: Rohr
- 21: Befüllstation
- 22: Ballaststoff
- 23: LKW
- 24: Gelände
- 25: Gewässer
- 26: Lager
- 27: Luftkissen
- 28: Hohlkammer

## Patentansprüche

1. Verfahren zur kontinuierlichen Fertigung von Kunststoffrohren bei dem mittels einer Extrusionsvorrichtung ein einen rohrförmigen Kern (11) bildender Rohrstrang kontinuierlich axial extrudiert wird und stromabwärts zur Extrusionsvorrichtung in der gleichen Extrusionslinie wenigstens ein Element einer Verstärkungsschicht in einem Wickelvorgang spiralförmig auf den rohrförmigen Kern gewickelt wird, wobei das wenigstens eine Element, welches spiralförmig auf den rohrförmigen Kern gewickelt wird, ein Profil (18) mit wenigstens einer Hohlkammer (28) ist,
**dadurch gekennzeichnet, dass** der Rohrstrang des rohrförmigen Kerns bereits beim Verlassen einer Düse der Extrusionsvorrichtung um seine Längsachse rotiert und der Rohrstrang des rohrförmigen Kerns während des Wickelvorgangs um seine Längsachse rotiert.

2. Verfahren nach Anspruch 1, **dadurch gekennzeichnet, dass** mindestens Teile der Rohrkopfdüse und/oder der Abzugsvorrichtung (13) der Extrusionsvorrichtung während des Extrusionsvorgangs um eine mittige Achse rotieren.

3. Verfahren nach Anspruch 1 oder 2, **dadurch gekennzeichnet, dass** wenigstens ein Hohlkammerprofil (18) kontinuierlich extrudiert und dann der Extrusionslinie des rohrförmigen Kerns von etwa radial/tangential außen kontinuierlich zugeführt und spiralförmig auf den rohrförmigen Kern (11) aufgewickelt wird.

4. Verfahren nach einem der Ansprüche 1 bis 3, **dadurch gekennzeichnet, dass** wenigstens ein Hohlkammerprofil (18) auf den frisch extrudierten noch heißen rohrförmigen Kern (11) aufgewickelt wird, so dass sich eine stoffschlüssige Verbindung zwischen den Berührungsflächen von Hohlkammerprofil und rohrförmigem Kern ergibt.

5. Verfahren nach einem der Ansprüche 1 bis 4, **dadurch gekennzeichnet, dass** wenigstens eine Hohlkammer (28) des Kunststoffrohrs nach dessen Extrusion mit einem Ballaststoff (22) befüllt wird.

6. Verfahren nach Anspruch 5, **dadurch gekennzeichnet, dass** der Ballaststoff (22) in der Hohlkammer (28) eine Dichte aufweist, die mindestens etwa 1,3 g/cm³ beträgt.

7. Verfahren nach einem der Ansprüche 5 oder 6, **dadurch gekennzeichnet, dass** ein mineralischer Ballaststoff (22) verwendet wird.

8. Verfahren nach einem der Ansprüche 5 bis 7, **dadurch gekennzeichnet, dass** der Ballaststoff (22) Sand, Zement, Quarz, Gesteinsmehl, Kies, Split, Metallpartikel oder Glas umfasst.

9. Verfahren nach einem der Ansprüche 5 bis 8, **dadurch gekennzeichnet, dass** als Ballaststoff eine Aufschlämmung oder eine breiige dickflüssige Substanz, insbesondere eine Betonmischung, in die Hohlkammern (28) eingefüllt wird.

10. Verfahren nach einem der Ansprüche 5 bis 8, **dadurch gekennzeichnet, dass** als Ballaststoff ein Schüttgut in rieselfähiger Form in die Hohlkammern (28) eingefüllt wird.

## Claims

1. Method for the continuous manufacture of plastic pipes, in which a tubing string forming a tubular core (11) is axially extruded continuously by means of an extrusion apparatus, and at least one element of a reinforcement layer is wound spirally onto the tubular core in a winding process in the same extrusion line downstream from the extrusion apparatus, wherein the at least one element which is wound spirally onto the tubular core is a profile (18) with at least one hollow chamber (28), **characterized in that** the tubing string of the tubular core is already rotating about its longitudinal axis when it leaves a dye of the extrusion apparatus, and the tubing string of the tubular core rotates about its longitudinal axis during the winding process.

2. Method according to Claim 1, **characterized in that** at least parts of the pipe head dye and/or of the take-off device (13) of the extrusion apparatus rotate about a central axis during the extrusion process.

3. Method according to Claim 1 or 2, **characterized in that** at least one hollow chamber profile (18) is extruded continuously and then fed continuously to the extrusion line of the tubular core from approximately radially/tangentially outwards and wound spirally onto the tubular core (11).

4. Method according to any one of Claims 1 to 3, **characterized in that** at least one hollow chamber profile (18) is wound onto the freshly extruded, still hot tubular core (11), so that a material bond is formed between the contact surfaces of the hollow chamber profile and the tubular core.

5. Method according to any one of Claims 1 to 4, **characterized in that** at least one hollow chamber (28) of the plastic pipe is filled with a ballast material (22) after it has been extruded.

6. Method according to Claim 5, **characterized in that** the ballast material (22) in the hollow chamber (28) has a density equal to at least about 1.3 g/cm³.

7. Method according to either of Claims 5 or 6, **characterized in that** a mineral ballast material (22) is used.

8. Method according to any one of Claims 5 to 7, **characterized in that** the ballast material (22) comprises sand, cement, quartz, rock flour, gravel, grit, metal particles or glass.

9. Method according to any one of Claims 5 to 8, **characterized in that** the hollow chambers (28) are filled with a slurry or a pulpy, viscous substance, particularly a concrete mixture, as ballast material.

10. Method according to any one of Claims 5 to 8, **characterized in that** the hollow chambers (28) are filled with a bulk material in pourable form as ballast material.

## Revendications

1. Procédé de fabrication continue de tubes en matière plastique pour lequel une ligne de tube formant un noyau tubulaire (11) est axialement extrudée au moyen d'un dispositif d'extrusion et au moins un élément d'une couche de renfort est enroulé en forme de spirale sur le noyau tubulaire dans une opération d'enroulement en aval du dispositif d'extrusion dans la même ligne d'extrusion, au moins un élément qui est enroulé en forme de spirale sur le noyau tubulaire, étant un profilé (18) avec au moins une chambre creuse (28), **caractérisé en ce que** la ligne de tube du noyau tubulaire tourne autour de son axe longitudinal déjà en quittant une filière du dispositif d'extrusion et la ligne de tube du noyau tubulaire tourne autour de son axe longitudinal pendant l'opération d'enroulement.

2. Procédé selon la revendication 1, **caractérisé en ce qu'**au moins des parties de la filière de tête de tube et/ou du dispositif de tirage (13) du dispositif d'extrusion tourne autour d'un axe central pendant l'opération d'extrusion.

3. Procédé selon la revendication 1 ou 2, **caractérisé en ce qu'**au moins un profilé à chambre creuse (18) est extrudé en continu et est ensuite acheminé en continu en extérieur de façon à peu près radiale/tangentielle à la ligne d'extrusion du noyau tubulaire et est enroulé en forme de spirale sur le noyau tubulaire (11).

4. Procédé selon l'une quelconque des revendications 1 à 3, **caractérisé en ce qu'**au moins un profilé à chambre creuse (18) est enroulé sur le noyau tubulaire (11) encore chaud fraîchement extrudé de telle sorte qu'il en résulte une liaison par conformité de matière entre les surfaces de contact du profilé à chambre creuse et le noyau tubulaire.

5. Procédé selon l'une quelconque des revendications 1 à 4, **caractérisé en ce qu'**au moins une chambre creuse (28) du tube en matière plastique est remplie d'une substance de lest (22) après extrusion de celui-ci.

6. Procédé selon la revendication 5, **caractérisé en ce que** la substance de lest (22) dans la chambre creuse (28) présente une densité qui est d'au moins à peu près 1,3 g/cm³.

7. Procédé selon l'une quelconque des revendications 5 ou 6, **caractérisé en ce qu'**une matière de lest minérale (22) est utilisée.

8. Procédé selon l'une quelconque des revendications 5 à 7, **caractérisé en ce que** la matière de lest (22) comprend du sable, du ciment, du quartz, de la roche pulvérisée, des gravillons, des pierres concassées, des particules métalliques ou du verre.

9. Procédé selon l'une quelconque des revendications 5 à 8, **caractérisé en ce qu'**une suspension ou une substance visqueuse pâteuse, notamment un mélange de béton, est introduite dans les chambres creuses (28).

10. Procédé selon l'une quelconque des revendications 5 à 8, **caractérisé en ce qu'**un matériau en vrac sous une forme capable de s'écouler est introduit dans les chambres creuses (28).
